# EUROPÄISCHE PATENTSCHRIFT

(11) **EP 1 612 432 B1**
(45) Veröffentlichungstag und Bekanntmachung des Hinweises auf die Patenterteilung: **31.10.2007**
(21) Anmeldenummer: 05104993.0
(22) Anmeldetag: 08.06.2005
(51) Int. Cl.: F16B 5/02, F16B 37/04

(54) **Befestigungsanordnung für eine Verkleidung und Befestigungsverfahren**
Fastening assembly for a trim panel and fastening method
Dispositif de fixation pour habillage et méthode de fixation

(30) Priorität: 28.06.2004 DE 102004031342
(43) Veröffentlichungstag der Anmeldung: 04.01.2006
(73) Patentinhaber: Newfrey LLC, Newark, Delaware 19711 (US)
(72) Erfinder: Stigler, Mario, 35641, Schöffengrund (DE); Werner, Wolfgang, 72766, Reutlingen (DE); Hahn, Ernst Ludwig, 35466, Rabenau (DE); Nitsch, Jürgen, 73663, Berglen (DE)
(74) Vertreter: Haar, Lucas Heinz Jörn

(56) Entgegenhaltungen:
- DE-A1- 10 208 624
- DE-A1- 19 944 685
- GB-A- 2 317 199
- US-A- 4 890 966

## Beschreibung

Die Erfindung betrifft eine Anordnung zur Befestigung einer Verkleidung an einer Unterlage mit einem Außenteil, das in einem Loch in der Verkleidung befestigbar ist und eine sich in Richtung einer Längsachse erstreckende Öffnung zur direkten oder indirekten Aufnahme eines mit einem Außengewinde versehenen Bolzens hat. Die Erfindung betrifft außerdem ein Verfahren zur Befestigung einer Verkleidung an einer Unterlage unter Verwendung einer derartigen Anordnung.

Eine derartige Anordnung bzw. ein derartiges Verfahren ist aus der DE 199 44 685 A1 bekannt.

Anordnungen der angegebenen Art werden u.a. im Automobilbau verwendet, um Verkleidungsteile mit dem Boden, den Wänden, den Türen oder dem Dach einer Fahrzeugkarosserie zu verbinden. Die Befestigungsanordnungen sollen hierbei die Verkleidungsteile fest und dauerhaft mit dem jeweiligen Karosserieteil als Unterlage verbinden und außerdem eine möglichst einfache und kostengünstige Montage der Verkleidung ermöglichen.

Aus GB 2 317 199 A ist eine zweiteilige Befestigungsanordnung zur Befestigung eines Verkleidungsteils an der Karosserie eines Fahrzeuges bekannt. Die Anordnung umfaßt ein Außenteil, das in einer Öffnung der Fahrzeugkarosserie verankert ist und das eine Ausnehmung mit nach innen gerichteten, federnden Fingern aufweist, welche ein zapfenartiges, mit Spermuten versehenes Innenteil aufnimmt und mit Hilfe der in die Spermuten einrastenden Finger festhält. Vor der Montage wird das Innenteil durch Kleben oder Schweißen an der Verkleidung befestigt. Diese Anordnung hat den Nachteil, daß die Fahrzeugkarosserie eine Öffnung haben muß.

Aus US 4,890,966 ist eine Anordnung zur Befestigung einer Verkleidung an einer Unterlage bekannt, bei der ein hülsenförmiges Außenteil von der der Unterlage abgekehrten Seite in ein Loch in der Verkleidung gesteckt unter Einführen eines Innenteils in das Außenteil fest mit der Verkleidung verbunden wird. Das Innenteil weist auf seiner der Unterlage zugekehrten Seite eine Öffnung mit Rastvorsprüngen auf, die zur Aufnahme eines an der Unterlage befestigten Gewindebolzens dient. Diese bekannten Anordnung hat den Nachteil, daß das Innenteil bei der Montage der Verkleidung sehr genau zu dem an der Unterlage angeordneten Bolzen ausgerichtet werden muß.

Eine aus DE 199 44 685 A1 bekannte Befestigungsanordnung zum Befestigen eines plattenförmigen Verkleidungsteils am Unterboden eines Kraftfahrzeugs, der mit nach unten ragenden Gewindebolzen versehen ist, weist ein durch ein Aufnahmeloch des Verkleidungsteils hindurchsteckbares Halteglied und eine Mutter auf, die durch eine Rastverbindung mit dem Halteglied derart verbindbar ist, daß die Mutter und das Halteglied an dem zwischen ihnen liegenden Verkleidungsteil unverlierbar gehalten sind. Bei der Montage des Verkleidungsteils dringt jeweils ein Gewindebolzen in ein Halteglied ein, wobei es zu einer Schnappverbindung zwischen dem Halteglied und dem Gewinde des Gewindebolzens kommt, durch den das Verkleidungsteil an dem Gewindebolzen unverlierbar gehalten wird. Anschließend können die Muttern angezogen werden, wodurch das Verkleidungsteil gegen den Unterboden festgezogen wird.

Weiterhin ist aus DE 102 08 624 A1 eine Vorrichtung zur einstellbaren Befestigung eines Bauteils an einem Halteteil bekannt, welche einen in eine Öffnung des Halteteils einsetzbaren und an diesem festhaltbaren Halter und eine Bohrung mit Verankerungsmitteln aufweist. In die Bohrung des Halters ist nach dessen Montage eine Positionierhülse einsetzbar, die an der Anlagefläche für das Bauteil und eine Bohrung zur Aufnahme eines Befestigungsteils aufweist. Die Positionierhülse ist durch eine Drehbewegung in axialer Richtung gegenüber dem Halter einstellbar. Zum Befestigen des Bauteils dient ein Befestigungsteil, das durch eine Öffnung in dem Bauteil hindurch in die Bohrung der Positionierhülse einfahrbar und dort reib- oder formschlüssig festhaltbar ist. Durch das Einsetzen des Befestigungsteils in die Positionierhülse ist außerdem eine Kupplung in eine Sperrstellung bewegbar, in der die Positionierhülse drehfest mit dem Halter verbunden ist. Diese bekannte Vorrichtung ist nicht zum Anschweißen bestimmt und auch nicht dazu geeignet. Die Gestaltung der Vorrichtung erfordert außerdem drei aufeinander folgende Montageschritte und eignet sich daher nicht für einfache, schnell durchführbare Montageaufgaben.

Bei den bekannten Befestigungsanordnungen sind jeweils drei voneinander unabhängige Montageschritte erforderlich, nämlich das Anbringen des Bolzens an die Unterlage, das Anbringen der mit dem Bolzen zusammenwirkenden Halteteile an der Verkleidung und anschließend die Montage der Verkleidung mit den Halteteilen an den Bolzen. Dies ist aufwendig. Zudem können sich Maßabweichungen addieren und dadurch die Montage erschweren.

Der Erfindung liegt die Aufgabe zugrunde, eine Anordnung der eingangs genannten Art zu schaffen, die sich durch eine einfache und kostengünstige Montage auszeichnet und die zudem eine einfache Demontage ermöglicht.

Die genannte Aufgabe wird durch die in Patentanspruch 1 angegebene Erfindung gelöst. Vorteilhafte Ausgestaltungen der Erfindung sind in den Ansprüchen 2 bis 16 angegeben.

Bei der Befestigungsanordnung nach der Erfindung ist das Außenteil von der der Unterlage zugekehrten Seite in das Loch in der Verkleidung einsteckbar und hat nach außen vorspringende, federnd nachgiebige Rastvorsprünge, die durch das Loch in der Verkleidung hindurchsteckbar sind und auf der der Unterlage abgekehrten Seite einen Abschnitt der Verkleidung hintergreifen. Weiterhin bilden das Außenteil und der Bolzen eine vormontierte Anschweißeinheit, welche in eine Schweißvorrichtung zum Anschweißen des Bolzens an der Unterlage einsetzbar ist und bei welcher der Bolzen mit einem Anschweißende aus dem Außenteil hervorsteht. Die erfindungsgemäße Befestigungsanordnung wird in einem ersten Montagevorgang durch Anschweißen des Bolzens an der Unterlage mit dieser fest verbunden. Zur Anbringung der Verkleidung ist dann nur noch ein weiterer Montageschritt erforderlich, bei welchem die Verkleidung mit dem darin vorgesehenen Loch auf das Außenteil aufgesteckt wird, wobei dieses das Loch in der Verkleidung teilweise durchdringt und nach Erreichen der vorgesehenen Position mit Hilfe seiner Rastvorsprünge die Verkleidung festhält. Die erfindungsgemäße Befestigungsanordnung benötigt daher nur zwei Montageschritte, wodurch sich der Montageaufwand erheblich reduziert. Von Vorteil ist weiterhin, daß die Summe der möglichen fertigungsbedingten Maßabweichungen kleiner gehalten werden kann, wodurch sich die Gefahr von Störungen bei der Montage verringert. Ein weiterer Vorteil besteht darin, daß durch das offene Loch in der Verkleidung die an der Unterlage angebrachten Anordnungen aus Bolzen und Außenteil optisch wahrgenommen werden können, um die Verkleidung genau zu positionieren.

Nach einem weiteren Vorschlag der Erfindung weist die Anordnung ein Innenteil auf, das in die Öffnung des Außenteils einsteckbar ist und das eine Längsbohrung zur Aufnahme des mit einem Außengewinde versehenen und zur Verbindung mit der Unterlage bestimmten Bolzens hat, wobei das Innenteil, das Außenteil und der Bolzen die vormontierte Anschweißeinheit bilden. Durch die Anordnung des Innenteils können zusätzliche Funktionen verwirklicht werden, die die Eigenschaften der Befestigungsanordnung erheblich verbessern. So kann das Innenteil in dem Außenteil drehbar sein und eine Angriffsfläche für ein Drehwerkzeug haben, so daß das Innenteil von dem Bolzen durch Drehen gelöst und damit eine Demontage der Verkleidung auf einfache Weise erzielt werden kann. Nach einem weiteren Vorschlag der Erfindung kann das Innenteil zumindest in dem der Unterlage benachbarten Bereich in der Öffnung des Außenteils radial beweglich angeordnet sein. Hierdurch wird eine radiale Verlagerung des Innenteils in dem Außenteil zum Ausgleich von fertigungsbedingten Maßabweichungen ermöglicht.

Vorzugsweise hat das Außenteil eine Durchgangsbohrung zur Aufnahme des Bolzens und/oder des Innenteils.

Zur axialen Abstützung des Innenteils in dem Außenteil weist das Innenteil einen Flansch auf, der mit seiner der Unterlage abgekehrten Seite eine Anlagefläche für das Außenteil und/oder die Verkleidung bildet. Vorzugsweise hat der Flansch die Form eines flachen Kegelstumpfes, der sich mit zunehmendem Durchmesser von der Unterlage entfernt. Im Bereich seines Umfangsrandes kann der Flansch in axialer Richtung federnd nachgiebig sein, um eine axiale Klemmung des Außenteils und/oder der Verkleidung zu ermöglichen. Zur Erzielung der axialen Nachgiebigkeit des Flansches kann der Umfangsrand des Flansches geschlitzt sein.

Nach einem weiteren Vorschlag der Erfindung weist das Innenteil an seinem der Unterlage abgekehrten Ende einen Kopf und unterhalb des Kopfes eine Einschnürung auf, wobei das Außenteil einen radial federnden Abschnitt hat, durch den der Kopf bei der Montage des Innenteils hindurchsteckbar ist und der in die Einschnürung einrastet und in der eingerasteten Stellung ein Widerlager für den Kopf bildet. Diese Gestaltung ermöglicht eine einfach Montage von Außenteil und Innenteil und sorgt gleichzeitig für eine gute Zugänglichkeit des Kopfes des Innenteils zum Zweck einer späteren Demontage.

Nach einem weiteren Vorschlag der Erfindung kann vorgesehen sein, daß das Außenteil einen in Einsteckrichtung hinter den Rastvorsprüngen und in einem Abstand von diesen angeordneten Flansch aufweist, der eine Anlagefläche für die der Unterlage zugekehrten Seite der Verkleidung bildet. Diese Gestaltung ist vor allem bei einer zweiteiligen Befestigungsanordnung zweckmäßig, bei der das Außenteil den Bolzen unmittelbar aufnimmt. Eine Alternative hierzu kann auch darin bestehen, daß das aus dem Außenteil hervorstehende Anschweißende des Bolzens mit einem Flansch versehen ist, an dem die Verkleidung und/oder das Außenteil und/oder das Innenteil abstützbar ist.

Der Erfindung liegt weiterhin die Aufgabe zugrunde, ein Verfahren anzugeben, durch das einen einfache und kostengünstige Montage einer Verkleidung an einer Unterlage unter Verwendung einer Anordnung der eingangs genannten Art ermöglicht wird. Diese Aufgabe wird durch das in Patentanspruch 17 angegebene Verfahren gelöst.

Die Erfindung wird nachfolgend anhand eines Ausführungsbeispiels näher erläutert, das in der Zeichnung dargestellt ist. Es zeigen
- Figur 1: eine erfindungsgemäße Befestigungsanordnung im Anlieferungszustand zur Montage,
- Figur 2: einen Längsschnitt der Befestigungsanordnung gemäß Figur 1,
- Figur 3: eine Seitenansicht des Außenteils der Befestigungsanordnung gemäß Figur 1,
- Figur 4: eine Stirnansicht des Außenteils der Befestigungsanordnung gemäße Figur 1,
- Figur 5: eine Seitenansicht des Innenteils der Befestigungsanordnung gemäß Figur 1,
- Figur 6: eine Stirnansicht des Innenteils der Befestigungsanordnung gemäß Figur 1 und
- Figur 7: einen Querschnitt der Befestigungsanordnung gemäß Figur 1 im eingebauten Zustand.

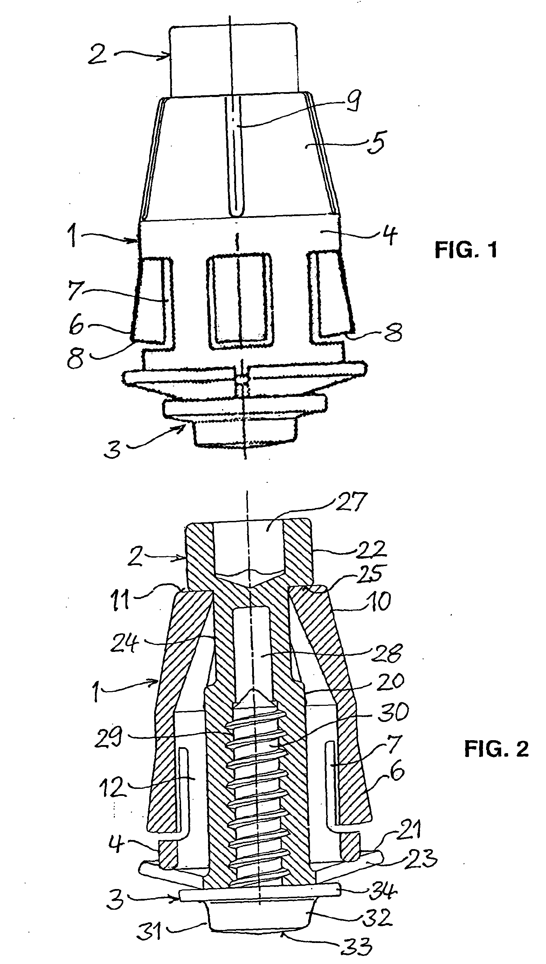

Die in den Figuren 1 und 2 dargestellte Befestigungsanordnung besteht aus einem hülsenförmigen Außenteil 1, einem darin angeordneten, ebenfalls hülsenförmigen, aber schlankeren Innenteil 2 und einem von dem Innenteil 2 aufgenommenen Bolzen 3. Das Außenteil 1 und das Innenteil 2 bestehen aus Kunststoff. Der Bolzen 3 besteht aus Metall, z.B. Stahl oder Aluminium, und ist zum Anschweißen an eine metallische Unterlage, z.B. ein Teil der Karosserie eines Fahrzeuges, bestimmt.

Das hülsenförmige Außenteil 1 weist einen zylindrischen Abschnitt 4 und einen konischen Abschnitt 5 auf, der sich zum Ende des Außenteils 1 hin verjüngt. An dem zylindrischen Abschnitt 4 befinden sich in einem Umfangsabstand von 90° vier Rastvorsprünge 6, die durch U-förmige Einschnitte 7 an drei Seiten von dem Abschnitt 4 getrennt sind und mit einem der Mitte des Außenteils 1 zugekehrten Ende mit dem Abschnitt 4 integral verbunden sind. Durch diese Formgebung gleichen die Rastvorsprünge 6 radial beweglichen Federzungen. Ihre freien Enden sind verdickt und ragen aus der zylindrischen Umfangskontur des zylindrischen Abschnitts 4 nach außen heraus, wobei sie mit ihren stirnseitigen Enden Abstützflächen 8 bilden, die zur Anlage an der Verkleidung bestimmt sind.

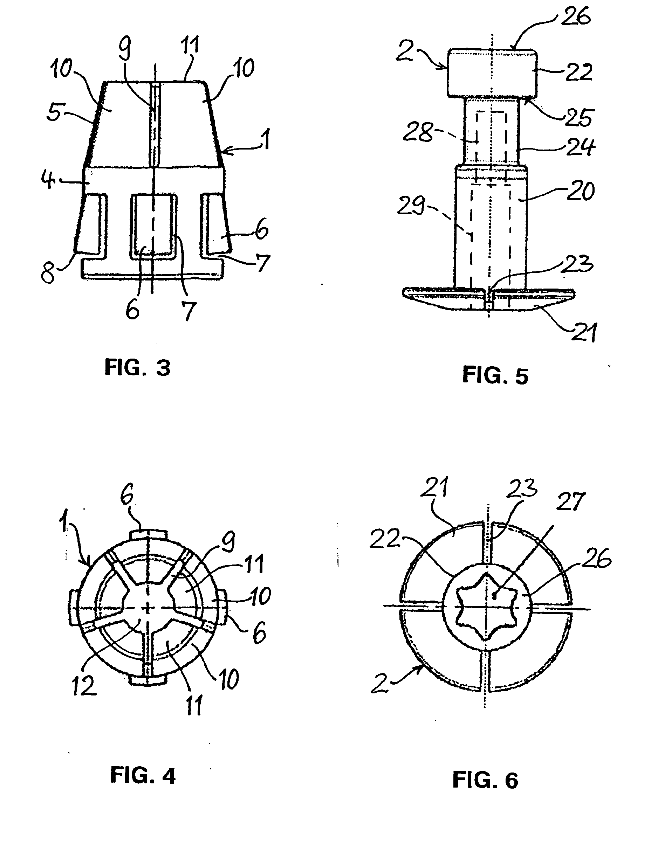

Wie insbesondere aus Figur 4 zu ersehen, ist der konische Abschnitt 5 des Außenteils durch fünf achsparallele Einschnitte 9 in vier Einzelabschnitte 10 unterteilt. Durch diese Gestaltung können die Einzelabschnitte 10 radial auseinandergedrückt werden, um dadurch die Montage des Innenteils 2 zu ermöglichen. Die stirnseitigen Enden der Einzelabschnitte 10 weisen Anlageflächen 11 auf, die in einer gemeinsamen radialen Ebene liegen. Wie insbesondere aus Figur 2 zu ersehen, weist das Außenteil 1 eine durchgehende Bohrung 12 auf, die analog zur Außenkontur des Außenteils 1 aus einem zylindrischen Abschnitt und einem konischen Abschnitt besteht.

Das Innenteil 2 hat einen zylindrischen Mittelabschnitt 20, der an seinem einen Ende einen Flansch 21 und an seinem anderen Ende einen zylindrischen Kopf 22 trägt. Der Flansch 21 hat die Form einer flachen, kegelstumpfförmigen Scheibe, die sich mit zunehmendem Durchmesser der Mitte des Mittelabschnittes 20 nähert. Im Abstand von 90° ist der Flansch 21 durch Schlitze 23 unterbrochen. Hierdurch wird eine federnde Nachgiebigkeit des äußeren Randbereichs des Flansches 21 in axialer Richtung erreicht.

Angrenzend an den Kopf 22 weist der Mittelabschnitt 20 eine zylindrische Einschnürung 24 auf. Die der Einschnürung 24 zugewandte Seite des Kopfes ist mit einer ebenen, sich radial erstreckende Abstützfläche 25 versehen. In der dem Mittenabschnitt 20 abgekehrten Stirnfläche 26 des Kopfes 22 befindet sich eine polygonal geformte Ausnehmung 27 zur Aufnahme eines zur Einleitung eines Drehmoments bestimmten Werkzeugs. Das Innenteil 2 weist außerdem eine zentrale Bohrung 28 auf, die an dem flanschseitigen Ende des Mittelabschnitts 20 offen ist und einen mit einem Innengewinde versehenen Abschnitt 29 enthält.

Wie aus Figur 2 zu ersehen, ist der Bolzen 3 mit seinem Gewindeabschnitt 30 in den Abschnitt 29 des Innenteils 2 eingeschraubt. Der Bolzen 3 weist einen Kopf 31 auf, der sich außerhalb des Innenteils 2 befindet. Der Kopf 31 bildet ein zylindrisches Anschweißende 32 mit einer stumpfkegligen Stirnfläche 33 und hat einen Flanschabschnitt 34, der zur Anlage an dem Innenteil 2 dient.

Die beschriebene Befestigungsanordnung wird zunächst in der in den Figuren 1 und 2 gezeigten Weise vormontiert. Hierzu wird der Bolzen 3 in das Innenteil 2 eingeschraubt, und das Innenteil 2 wird mit dem Außenteil 1 verbunden. Dies geschieht in der Weise, daß das Innenteil 2 mit dem Kopf 22 voran in das dem zylindrischen Abschnitt 4 zugeordnete Ende der Bohrung 12 eingesteckt und dann in axialer Richtung so weit relativ zum Außenteil 1 verschoben wird, bis die in der Zeichnung dargestellte Endlage erreicht ist. Bei diesem Vorgang werden die Einzelabschnitte 10 von dem Kopf 22 auseinandergedrückt, so daß der Kopf 22 durch die Einzelabschnitte 10 hindurchgleiten kann. Sobald der Kopf 22 aus den Einzelabschnitten 10 heraustritt, federn diese in ihre ursprüngliche Lage zurück und rasten in die Einschnürung 24 ein, wobei ihre Anlageflächen 11 mit der Abstützfläche 25 des Kopfes 22 in Eingriff gelangen und dadurch den Kopf 22 entgegen der Einsteckrichtung festhalten. In der Einsteckrichtung stützt sich das Innenteil 2 mit dem Flansch 21 an der Stirnseite des zylindrischen Abschnitts 4 des Außenteil 1 ab. Das Innenteil 2 ist daher in dem Außenteil 1 unverlierbar gehalten.

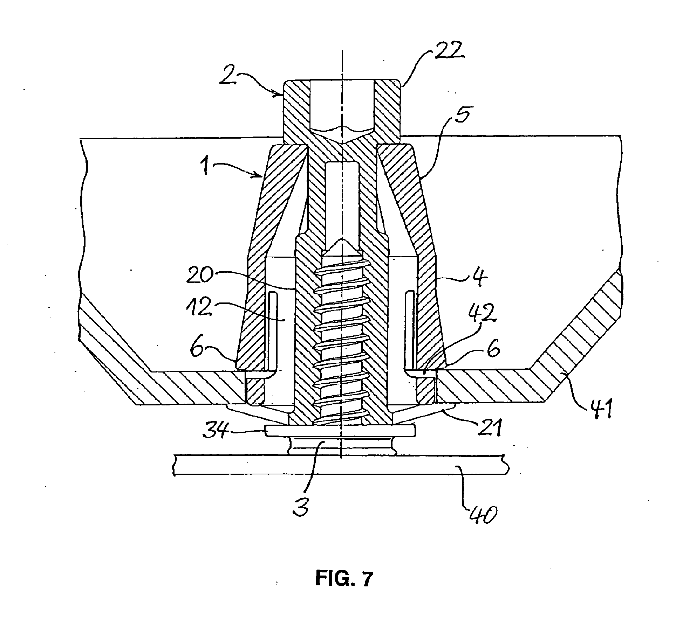

Die vormontierte Anschweißeinheit aus Außenteil 1, Innenteil 2 und Bolzen 3 wird in einem ersten Montageschritt mit Hilfe einer Schweißvorrichtung an einer Unterlage, beispielsweise dem Unterboden eines Kraftfahrzeugs, befestigt. Die Schweißvorrichtung ergreift beispielsweise den Flanschabschnitt 34 des Bolzens 3 und schweißt diesen im Hubzündungsverfahren an einer Unterlage 40 an, wie in Figur 7 gezeigt. Auf diese Weise wird zunächst die vorgesehene Anzahl von Befestigungsanordnungen in einer vorgegebenen Ordnung an der Unterlage 40 angebracht.

In einem zweiten Montageschritt wird dann die Verkleidung 41 montiert. Die Verkleidung 41 weist an den Stellen, wo sich die Befestigungsanordnungen an der Unterlage 40 befinden, Löcher 42 auf, deren Durchmesser dem Außendurchmesser des zylindrischen Abschnitts 4 des Außenteil 1 im wesentlichen entspricht. Da das von der Unterlage 40 entfernte Ende des konischen Abschnitts 5 des Außenteils 1 und auch der Kopf 22 des Innenteils 2 einen kleineren Durchmesser haben, läßt sich die Verkleidung 41 leicht zu den Befestigungsanordnungen ausrichten und auf diese aufstecken, wobei die konischen Außenflächen des Abschnittes 5 für die erforderliche Zentrierung in Bezug auf die Verkleidung sorgen. Die Verkleidung 41 wird dann an den einzelnen Befestigungsanordnungen bis zur Anlage an den Flansch 21 über das Außenteil 1 geschoben, wobei die Rastvorsprünge 6 zunächst radial nach innen ausweichen, um dann bei Erreichen der Endlage in die in Figur 7 gezeigte Verriegelungsstellung zurückzufedern und die Verkleidung 41 zwischen dem Außenteil 1 und dem Innenteil 2 festzuhalten. In dieser Stellung ist der an der Verkleidung 1 anliegende Umfangsrand des Flansches 21 etwas in Richtung auf die Unterlage 40 elastisch verformt. Die aus dem Verformungswiderstand resultierende Gegenkraft ist daher bestrebt, die Verkleidung 41 fest an die Rastvorsprünge 6 anzudrücken und dadurch spielfrei zu halten.

Kommt es hinsichtlich der Positionierung beim Anschweißen der Bolzen 3 oder beim Ausbilden der Löcher 42 zu kleineren Maßabweichungen, so können diese durch eine radiale Verschiebung des zylindrischen Abschnitts des Außenteils gegenüber dem Innenteil ausgeglichen werden. Hierzu weist der Mittelabschnitt 20 des Innenteils 2 einen deutliche kleineren Außendurchmesser auf als die Bohrung 12 im Abschnitt 4 des Außenteils 1.

Die beschriebene Befestigungsanordnung ermöglich zudem eine einfache Demontage der Verkleidung, falls dies für Reparatur- oder Wartungsarbeiten notwendig ist. Zur Demontage wird das Innenteil 2 mit Hilfe eines Werkzeugs durch Drehen von dem Bolzen 3 gelöst. Innenteil 2 und Außenteil 1 bleiben hierbei mit der Verkleidung fest verbunden und können zur erneuten Montage wieder verwendet werden.

Die beschriebene Befestigungsanordnung zeichnet sich vor allem durch einfache Herstellbarkeit ihrer Einzelteile, durch einfache Montierbarkeit und geringen Montageaufwand aus. Außer einer Schweißvorrichtung zum Anschweißen der Bolzen an der Unterlage werden zur Montage keine Werkzeuge benötigt. Auch die Demontage ist einfach und kann mit einem üblichen Werkzeug zum Lösen und Befestigen von Schrauben ausgeführt werden. Die beschriebene Anordnung zeichnet sich weiterhin durch geringe Empfindlichkeit gegenüber Maßabweichungen aus und gewährleistet eine stabile und spielfreie Halterung der Verkleidung. An der Verkleidung sind keine aufwendigen Vorkehrungen zur Anbringung der Befestigungsanordnung notwendig, vielmehr genügt hierzu die Herstellung eines Loches in geeigneter Größe. Unterlage und Verkleidung können aus Metall oder Kunststoff bestehen. Gleiches trifft für die Bauteile der Befestigungsanordnung zu.

## Patentansprüche

1. Anordnung zur Befestigung einer Verkleidung (41) an einer Unterlage (40) mit einem Außenteil (1), das in einem Loch (42) in der Verkleidung (41) befestigbar ist und eine sich in Richtung einer Längsachse erstreckende Öffnung (12) zur direkten oder indirekten Aufnahme eines mit einem Außengewinde versehenen Bolzens (3) hat, wobei das Außenteil (1) von der der Unterlage (40) zugekehrten Seite in das Loch (42) in der Verkleidung (41) einsteckbar ist und nach außen vorspringende, federnd nachgiebige Rastvorsprünge (6) hat, die durch das Loch (42) in der Verkleidung (41) hindurchsteckbar sind und einen Abschnitt der Verkleidung(41) auf der der Unterlage (40) abgekehrten Seite hintergreifen, wobei das Außenteil (1) einen zylindrischen Abschnitt (4) und einen konischen Abschnitt (5) aufweist, der sich zum Einsteckende des Außenteils (1) hin verjüngt, **dadurch gekennzeichnet, daß** das Außenteil (1) und der Bolzen (3) eine vormontierte Anschweißeinheit bilden, welche in eine Schweißvorrichtung zum Anschweißen des Bolzens (3) an der Unterlage einsetzbar ist und bei welcher der Bolzen (3) mit einem Anschweißende (32) aus dem Außenteil (1) hervorsteht.

2. Anordnung nach Anspruch 1, **gekennzeichnet durch** ein Innenteil (2), das in die Öffnung (12) des Außenteils (1) einsteckbar ist und das eine Längsbohrung (28) zur Aufnahme des mit einem Außengewinde versehenen und zur Verbindung mit der Unterlage (40) bestimmten Bolzens (3) hat, wobei das Außenteil (1), das Innenteil (2) und der Bolzen (3) eine vormontierte Anschweißeinheit bilden, aus welcher der Bolzen (3) mit einem Anschweißende (32) hervorsteht.

3. Anordnung nach einem der Ansprüche 1 oder 2, **dadurch gekennzeichnet, daß** das Außenteil (1) eine Durchgangsbohrung (12) zur Aufnahme des Bolzens (3) und/oder des Innenteils (2) hat.

4. Anordnung nach einem der Ansprüche 2 oder 3, **dadurch gekennzeichnet, daß** das Innenteil (2) in dem Außenteil (1) drehbar ist und daß an dem Innenteil eine Angriffsfläche für ein Drehwerkzeug ausgebildet ist.

5. Anordnung nach einem der vorhergehenden Ansprüche 2 bis 4, **dadurch gekennzeichnet, daß** das Innenteil (2) zumindest in dem der Unterlage (40) benachbarten Bereich in der Öffnung (12) des Außenteils (1) radial beweglich angeordnet ist.

6. Anordnung nach einem der vorhergehenden Ansprüche 2 bis 5, **dadurch gekennzeichnet, daß** das Innenteil (2) einen Flansch (21) aufweist, der mit seiner der Unterlage (40) abgekehrten Seite eine Anlagefläche für die Verkleidung und/oder das Außenteil bildet.

7. Anordnung nach Anspruch 6, **dadurch gekennzeichnet, daß** der Flansch (21) die Form eines flachen Kegelstumpfes hat, der sich mit zunehmendem Durchmesser von der Unterlage entfernt.

8. Anordnung nach einem der vorhergehenden Ansprüche 2 bis 7, **dadurch gekennzeichnet, daß** der Flansch (21) im Bereich seines Umfangsrandes in axialer Richtung federnd nachgiebig ist.

9. Anordnung nach Anspruch 8, **dadurch gekennzeichnet, daß** der Umfangsrand des Flansches (21) geschlitzt ist.

10. Anordnung nach einem der vorhergehenden Ansprüche 2 bis 9, **dadurch gekennzeichnet, daß** die Längsbohrung (28) des Innenteils (2) einen Abschnitt (29) mit Innengewinde hat.

11. Anordnung nach einem der vorhergehenden Ansprüche 2 bis 10, **dadurch gekennzeichnet, daß** das Innenteil (2) an seinem der Unterlage abgekehrten Ende einen Kopf (22) und unterhalb des Kopfes eine Einschnürung (24) hat und daß das Außenteil (1) einen radial federnd nachgiebigen Abschnitt (5) hat, durch den der Kopf hindurch steckbar ist und der in die Einschnürung (24) einrastet und in der eingerasteten Stellung ein Widerlager für den Kopf (22) bildet.

12. Anordnung nach einem der vorhergehenden Ansprüche, **dadurch gekennzeichnet, daß** das Außenteil (1) einen in Einsteckrichtung hinter den Rastvorsprüngen (6) und in einem Abstand von diesen angeordneten Flansch aufweist, der auf der der Unterlage zugekehrten Seite an der Verkleidung abstützbar ist.

13. Anordnung nach einem der vorhergehenden Ansprüche, **dadurch gekennzeichnet, daß** das aus dem Außenteil (1) und gegebenenfalls dem Innenteil (2) hervorstehende Anschweißende (32) des Bolzens (3) einen Flansch (34) aufweist, an dem die Verkleidung (41) und/oder das Außenteil (1) und/oder das Innenteil(2) abstützbar ist.

14. Anordnung nach einem der vorhergehenden Ansprüche, **dadurch gekennzeichnet, daß** der Bolzen (3) aus Metall besteht.

15. Anordnung nach einem der vorhergehenden Ansprüche, **dadurch gekennzeichnet, daß** der Bolzen (3) aus Kunststoffbesteht.

16. Anordnung nach einem der vorhergehenden Ansprüche, **dadurch gekennzeichnet, daß** das der Verkleidung (41) zugewandte Ende des Außenteils (1) eine sich mit der Entfernung von dem Anschweißende (32) des Bolzens (3) verjüngende Außenkontur hat.

17. Verfahren zur Befestigung einer Verkleidung an einer Unterlage unter Verwendung einer Anordnung nach einem der vorhergehenden Ansprüche, **dadurch gekennzeichnet, daß** die vormontierte Anschweißeinheit aus Außenteil (1) und Bolzen (3) oder aus Außenteil (1), Innenteil (2) und Bolzen (3) einer Schweißvorrichtung zugeführt wird und mit dem aus dem Außenteil (1) hervorstehenden Anschweißende des Bolzens (3) an eine Unterlage (40) angeschweißt wird und daß anschließend die Verkleidung(41) mit einem darin befindlichen Loch (42) zu dem an der Unterlage (40) befestigten Außenteil (1) ausgerichtet und an die Unterlage (40) derart angedrückt wird, daß das Außenteil (1) in das Loch (42) eindringt und die federnd nachgiebigen Rastfinger (6) einen Abschnitt der Verkleidung (41) auf der der Unterlage (40) abgekehrten Seite hintergreifen.

## Claims

1. Assembly for fastening a trim panel (41) to a base (40) having an outer part (1), which can be fastened in a hole (42) in the trim panel (41) and which has an opening (12) extending in the direction of a longitudinal axis for direct or indirect accommodation of a stud (3) that has an external thread, the outer part (1) being insertable into the hole (42) in the trim panel (41) from the side facing the base (40) and having outwardly projecting, elastically resilient locking projections (6), which can be passed through the hole (42) in the trim panel (41) and engage behind a section of the trim panel on the side facing away from the base, the outer part (1) having a cylindrical section (4) and a conical section (5), which tapers down the insertion end of the outer part (1), **characterised in that** the outer part (1) and the stud (3) form a pre-assembled welding unit, which can be used in a welding apparatus for welding the stud (3) to the base and in which a weldable end (32) of the stud (3) protrudes out of the outer part (1).

2. Assembly according to claim 1, **characterised by** an inner part (2), which can be inserted into the opening (12) of the outer part (1) and which has a longitudinal hole (28) to receive the stud (3), which has an external thread and is intended for attachment to the base (40), wherein the outer part (1), the inner part (2) and the stud (3) form a pre-assembled welding unit from which a weldable end (32) of the stud (3) protrudes.

3. Assembly according to one of claims 1 or 2, **characterised in that** the outer part (1) has a through-hole (12) to receive the stud (3) and/or the inner part (2).

4. Assembly according to one of claims 2 or 3, **characterised in that** the inner part (2) is capable of rotating in the outer part (1) and **in that** a driving surface for a driving tool is formed on the inner part.

5. Assembly according to one of the preceding claims 2-4, **characterised in that** the inner part (2) is arranged to be radially movable in the opening (12) of the outer part (1), at least in the region adjacent to the base (40).

6. Assembly according to one of the preceding claims 2-5, **characterised in that** the inner part (2) has a flange (21) whose side facing away from the base (40) forms a contact surface for the trim panel and/or the outer part.

7. Assembly according to claim 6, **characterised in that** the flange (21) has the shape of a flat, truncated cone, whose diameter increases with increasing distance from the base.

8. Assembly according to one of the preceding claims 2 - 7, **characterised in that**, in the region of its outer edge, the flange (21) is elastically resilient in the axial direction.

9. Assembly according to claim 8, **characterised in that** the outer edge of the flange (21) is slotted.

10. Assembly according to one of the preceding claims 2-9, **characterised in that** the longitudinal hole (28) of the inner part (2) has a portion (29) with an internal thread.

11. Assembly according to one of the preceding claims 2 - 10, **characterised in that** the inner part (2) has a head (22) at its end facing away from the base, and below the head has a constriction (24), and **in that** the outer part (1) has a radially resilient portion (5) which the head can pass through and which latches into the constriction (24), forming an abutment for the head (22) in the latched position.

12. Assembly according to one of the preceding claims, **characterised in that** the outer part (1) has a flange arranged behind the locking projections (6) in the insertion direction and a distance therefrom, which can be supported on the trim panel on the side facing the base.

13. Assembly according to one of the preceding claims, **characterised in that** the weldable end (32) of the stud (3) projecting from the outer part (1), and potentially also from the inner part (2), has a flange (34) on which the trim panel (41) and/or the outer part (1) and/or the inner part (2) can be supported.

14. Assembly according to one of the preceding claims, **characterised in that** the stud (3) is made of metal.

15. Assembly according to one of the preceding claims, **characterised in that** the stud (3) is made of plastic.

16. Assembly according to one of the preceding claims, **characterised in that** the end of the outer part (1) facing the trim panel (41) has an outer contour that narrows with increasing distance from the weldable end (32) of the stud (3).

17. Method for fastening a trim panel to a base using an assembly according to one of the preceding claims, **characterised in that** the pre-assembled welding unit of outer part (1) and stud (3), or of outer part (1), inner part (2) and stud (3), is supplied to a welding apparatus and the weldable end of the stud (3) projecting from the outer part (1) is welded to a base (40), and **in that** subsequently a hole (42) located in the trim panel (41) is aligned with the outer part fastened to the base (40) and is pressed onto the base (40) such that the outer part (1) penetrates the hole (42) and the elastically resilient locking fingers (6) interlock with a section of the trim panel (41) on the side facing away from the base (40).

## Revendications

1. Dispositif de fixation d'un habillage (41) sur un support (40), comprenant un élément extérieur (1) pouvant être fixé dans un trou (42) ménagé dans l'habillage (41) et présentant une ouverture (12) s'étendant dans le sens d'un axe longitudinal, conçue pour recevoir de façon directe ou indirecte un boulon (3) pourvu d'un filetage extérieur, l'élément extérieur (1) pouvant être emmanché dans le trou (42) ménagé dans l'habillage (41) depuis le côté faisant face au support (40), et comprenant des saillies d'enclenchement (6) saillant à l'extérieur, élastiquement déformables, qui peuvent s'engager à travers le trou (42) ménagé dans l'habillage (41) et s'enclenchent derrière une partie de l'habillage, du côté éloigné du support (40), l'élément extérieur (1) comprenant une partie cylindrique (4) et une partie conique (5) qui se resserre en direction de l'extrémité d'engagement de l'élément extérieur (1),
**caractérisé en ce que**
l'élément extérieur (1) et le boulon (3) forment un ensemble à souder pré-assemblé, qui peut être placé dans un appareil de soudage en vue de souder le boulon (3) sur le support, et dans lequel un bout de soudage (32) du boulon (3) fait saillie à l'extérieur de l'élément extérieur.

2. Dispositif selon la revendication 1, **caractérisé par** un élément intérieur (2) qui peut être emmanché dans l'ouverture (12) de l'élément extérieur (1), et qui comprend un alésage longitudinal (28) destiné à recevoir le boulon (3) pourvu d'un filetage extérieur et destiné à être relié au support (40), l'élément extérieur (1), l'élément intérieur (2) et le boulon (3) formant un ensemble de soudage pré-assemblé, depuis lequel le boulon (3) fait saillie.

3. Dispositif selon l'une des revendications 1 ou 2, **caractérisé en ce que** l'élément extérieur (1) comprend un alésage débouchant (12) destiné à recevoir le boulon (3) et/ou l'élément intérieur (2).

4. Dispositif selon l'une des revendications 2 ou 3, **caractérisé en ce que** l'élément intérieur (2) est monté de façon rotative dans l'élément extérieur (1), et **en ce qu'**une surface de prise pour un outil de rotation est formée sur l'élément intérieur.

5. Dispositif selon l'une des revendications précédentes 2 à 4, **caractérisé en ce que** l'élément intérieur (2) est monté de façon radialement mobile dans l'ouverture (12) de l'élément extérieur (1) au moins dans la zone avoisinante au support (40).

6. Dispositif selon l'une des revendications précédentes 2 à 5, **caractérisé en ce que** l'élément intérieur (2) comprend une bride (21), dont la face éloignée du support (40) constitue une surface d'appui pour l'habillage et/ou l'élément extérieur.

7. Dispositif selon la revendication 6, **caractérisé en ce que** la bride (21) présente la forme d'un cône tronqué plat dont le plus grand diamètre s'éloigne du support.

8. Dispositif selon l'une des revendications 2 à 7, **caractérisé en ce que** la bride (21) est élastiquement déformable dans le sens axial au niveau de son bord périphérique.

9. Dispositif selon la revendication 8, **caractérisé en ce que** le bord périphérique de la bride (21) est fendu.

10. Dispositif selon l'une des revendications précédentes 2 à 9, **caractérisé en ce que** l'alésage longitudinal (28) de l'élément intérieur (2) comprend une partie (29) pourvue d'un filetage intérieur.

11. Dispositif selon l'une des revendications 2 à 10, **caractérisé en ce que**, du côté éloigné du support, l'élément intérieur (2) présente une tête (22) et, en dessous de la tête, un resserrement (24), et **en ce que** l'élément extérieur (1) comprend une section (5) radialement élastiquement déformable, à travers laquelle la tête peut être emmanchée, et qui s'enclenche dans le resserrement (24) pour constituer, dans la position d'enclenchement, une butée pour la tête (22).

12. Dispositif selon l'une des revendications précédentes, **caractérisé en ce que** l'élément extérieur (1) comporte une bride située derrière les saillies d'enclenchement (6), dans le sens de l'emmanchement, et à une distance de celles-ci, dont la face tournée vers le support peut prendre appui sur l'habillage.

13. Dispositif selon l'une des revendications précédentes, **caractérisé en ce que** l'extrémité à souder (32) du boulon (3), qui ressort de l'élément extérieur (1) et fait saillie, le cas échéant, depuis l'élément intérieur (2), comprend une bride (34) sur laquelle peut s'appuyer l'habillage (41) et/ou l'élément extérieur (1) et/ou l'élément intérieur (2).

14. Dispositif selon l'une des revendications précédentes, **caractérisé en ce que** le boulon (3) est fait en métal.

15. Dispositif selon l'une des revendications précédentes, **caractérisé en ce que** le boulon (3) est fait en matière plastique.

16. Dispositif selon l'une des revendications précédentes, **caractérisé en ce que** l'extrémité de l'élément extérieur (1), qui est tournée vers l'habillage (41), présente un contour extérieur qui se resserre au fur et à mesure qu'il s'éloigne de l'extrémité à souder (32) du boulon (3).

17. Procédé de fixation d'un habillage sur un support en utilisant un dispositif selon l'une des revendications précédentes,
**caractérisé en ce que**
l'ensemble à souder pré-assemblé composé des élément extérieur (1) et boulon (3), ou des élément extérieur (1), élément intérieur (2) et boulon (3), est acheminé vers un appareil de soudage, et est soudé sur un support (40) au niveau de l'extrémité à souder du boulon (3), qui fait saillie en dehors de l'élément extérieur (1), et qu'ensuite, l'habillage (41) avec un trou (42) ménagé dans celui-ci est aligné sur l'élément extérieur (1) fixé sur le support (40) et est poussé contre le support (40), de manière telle que l'élément extérieur (1) pénètre dans le trou (42), et que les doigts d'enclenchement (6) élastiquement déformables s'engagent derrière une partie de l'habillage (41), du côté éloigné du support (40).
